# EUROPEAN PATENT APPLICATION

(11) **EP 3 608 442 A1**
(43) Date of publication of application: **12.02.2020**
(21) Application number: 18774246.5
(22) Date of filing: 23.03.2018
(51) Int. Cl.: C23C 28/00, B32B 15/04

(54) **AL-BASED PLATED STEEL SHEET**

(30) Priority: 27.03.2017 JP 2017061796
(71) Applicant: Nippon Steel Corporation, Tokyo 1008071 (JP)
(72) Inventor: YAMAGUCHI Shinichi, Tokyo 100-8071 (JP); YAMANAKA Shintaro, Tokyo 100-8071 (JP)
(74) Representative: Vossius & Partner Patentanwälte Rechtsanwälte mbB
(86) International application number: PCT/JP2018/011701
(87) International publication number: WO 2018/180986

(57) **Abstract**

An Al-plated steel sheet (100) includes: a base (101); an Al-plating layer (103) formed on at least one of opposite surfaces of the base (101); and a surface layer (107) formed on the Al-plating layer (103), the surface layer (10) containing: ZnO particles (109); an organic resin (111); and acetylacetonato in an amount in a range from 10 mass% to 30 mass%, both inclusive, with respect to a total mass of the surface layer. A mean particle size of the ZnO particles (109) is in a range from 0.10 µm to 5.00 µm, both inclusive, and an amount of coating of the ZnO particles (109) is in a range from 0.5 g/m² to 10.0 g/m², both inclusive, in terms of metal Zn.

## Description

### TECHNICAL FIELD

The present invention relates to an Al-plated steel sheet suitable for hot pressing capable of exhibiting sufficient formability (lubricity), corrosion resistance (corrosion resistance of painted steel), and the like during hot pressing.

### BACKGROUND ART

There has recently been an increasing demand for reducing consumption of fossil fuel for the purpose of environmental protection and global warming reduction. Such a demand has affected a variety of manufacturing industries. The automobile industry, which provides transportation devices necessary for daily life and the like, has also been affected, so that fuel consumption has been required to be reduced by, for instance, a reduction of the weight of a vehicle body. Many automobile parts are made of iron, especially, steel sheet. A reduction in a total weight of steel sheet in use is thus important for a reduction in the weight of a vehicle body and, consequently, fuel consumption.

However, simply reducing a thickness of steel sheet is not permitted due to the necessity to ensure the safety of automobiles, so that a mechanical strength of the steel sheet needs to be maintained. Such a demand for steel sheet has been increased not only in the automobile industry but also in a variety of other manufacturing industries. Accordingly, studies and developments have been conducted on an enhancement of the mechanical strength of steel sheet to provide steel sheet whose mechanical strength can be maintained or improved even when it is thinned as compared with a typical steel sheet.

A typical material with an excellent mechanical strength tends to have lowered formability and shape freezing properties during a forming process such as bending, so that the material is difficult to form into a complicated shape. Technologies capable of overcoming such a formability problem include so-called hot pressing (also referred to as hot stamping, hot pressing, die quenching, and press hardening). In hot pressing, a material (target to be subjected to a forming process) is first heated to a high temperature (austenite range), and cooled after the steel sheet softened by heating is subjected to press forming.

Such hot pressing, in which a material is first heated to a high temperature to be softened, allows the material to be easily press-formed. Additionally, a quenching effect provided by cooling after the forming increases the mechanical strength of the material. The hot pressing can thus provide a molding article with good shape freezing properties and high mechanical strength.

However, when steel sheet is heated to, for instance, 800 degrees C or higher for hot pressing of the steel sheet, scale (oxide) is generated as a result of oxidization of an iron component in a surface of the steel sheet. This necessitates removal of the scale (descaling) after the hot pressing, lowering the productivity. Furthermore, in producing a molding article designed to exhibit corrosion resistance, an anti-corrosion treatment has to be performed on a surface of the molding article subsequently to hot pressing or, alternatively, surface cleaning or surface treatment has to be performed to form a metallic coating, further lowering the productivity.

Such a lowered productivity can be prevented by, for instance, forming a metallic coating on steel sheet. A typical metallic coating on steel sheet can be made of a variety of materials such as organic materials and inorganic materials. Especially, a zinc-plated steel sheet capable of sacrificial protection of steel sheet has been widely used as steel sheet for automobiles and the like in terms of anti-corrosion performance and steel sheet production technology (Patent Literature 1).

However, a heating temperature (700 degrees C to 1000 degrees C) for hot pressing is higher than decomposition temperatures for organic materials and boiling temperature of Zn (zinc). Thus, as steel sheet is heated for hot pressing, a plating layer on the surface of the steel sheet would be oxidized or evaporated, considerably impairing a surface texture and deteriorating slidability during the hot pressing. To prevent such a problem, it is necessary to, for instance, add aluminum in a predetermined range of amount to the zinc-plating layer and, additionally, form a film configured to be melted at a press temperature on the zinc-plating layer (Patent Literature 2).

Accordingly, for instance, an Al (aluminum) metallic coating, which is higher in boiling temperature than an organic material film and a Zn metallic coating, is preferably formed on steel sheet to be heated to a high temperature for hot pressing to provide a so-called Al-plated steel sheet. Formation of such an Al metallic coating prevents adhesion of scale onto a surface of steel sheet, eliminating the necessity of a descaling treatment or the like with improved productivity. The Al metallic coating also provides an anti-corrosion effect to improve corrosion resistance of painted steel.

According to a proposed method, an Al-plated steel sheet with an Al metallic coating formed on steel of a predetermined steel composition is subjected to hot pressing (see, for instance, Patent Literature 3). One of the challenges of an Al-plating material for hot pressing as disclosed in Patent Literature 3 is to improve the formability during hot pressing. There are some problems regarding the formability during hot pressing. For instance, an Fe-Al-Si plating layer generated during heating bites into a mold due to the hardness thereof or cumulates on the mold due to the large friction coefficient thereof. Such problems would result in damages on a surface of a product, impairing the appearance quality.

According to a proposed method to solve the above problems, a coating layer containing zinc oxide (ZnO) is stuck on a plating surface (see, for instance, Patent Literature 4). Specifically, the method disclosed in Patent Literature 4 includes: sticking a coating layer onto a surface of steel sheet, the coating layer containing a binder consisting of a resin component, a silane coupler, or the like so that ZnO is prevented from falling off; and volatilizing an organic solvent component of the binder at a temperature of 300 degrees C to 500 degrees C during hot pressing so that only ZnO remains. This method is said to allow voids to be generated by combustion and evaporation of the organic solvent, causing ZnO to be in point-contact with the molding metal for improved lubricity.

According to another proposed method, an oxide such as ZnO is used to improve temperature-rise properties during in-furnace heating or infrared heating, chemical convertibility after heat pressing, and corrosion resistance of painted steel as well as lubricity during hot pressing (see, for instance, Patent Literatures 5 to 8).

### CITATION LIST

### PATENT LITERATURE(S)

Patent Literature 1 JP 2010-242188 A
Patent Literature 2 JP 2011-32498 A
Patent Literature 3 JP 2000-38640 A
Patent Literature 4 International Publication No. WO 2009/131233
Patent Literature 5 JP 2012-92365 A
Patent Literature 6 JP 2013-227620 A
Patent Literature 7 JP 2013-221202 A
Patent Literature 8 International Publication No. WO 2014/181653

### SUMMARY OF THE INVENTION

### PROBLEM(S) TO BE SOLVED BY THE INVENTION

As disclosed in Patent Literatures 4 to 8, a surface layer containing ZnO formed on an Al-plating improves the slidability during hot pressing. However, studies by the inventors have proven that when an Al-plated steel sheet is heated on a conveyor for preheating and transportation prior to hot pressing, a ZnO metallic coating disappears from a stacked portion of the steel sheet in contact with the conveyor, lowering the hot slidability of this portion and, consequently, making the formability (lubricity) insufficient as a whole.

In view of the above, an object of the invention is to provide an Al-plated steel sheet suitable for hot pressing capable of reducing loss of ZnO from a contact area with a conveyor during heating to provide sufficient formability (lubricity) during hot pressing, corrosion resistance (corrosion resistance of painted steel), and the like.

### MEANS FOR SOLVING THE PROBLEM(S)

To solve the above problems, the inventors first researched the reasons for disappearance of the ZnO metallic coating at the stacked portion in contact with the conveyor. During continuous heating in an air atmosphere furnace, an organic resin component or Al present in a plating surface is usually combined with oxygen in atmosphere to be oxidized. However, the stacked portion of the plated steel sheet in contact with the conveyor is supplied with less oxygen, so that ZnO is reduced by Al to be oxidized. In other words, it has been found that ZnO is reduced to metal Zn as a result of adverse response of oxidation of the organic resin component or Al present in the plating surface and, consequently, the metal Zn disappears by vaporization.

Under such conditions, the inventors have also found that a surface layer formed on an Al-plating layer on the steel surface can reduce loss of ZnO at the contact area with the conveyor during heating and, consequently, provide sufficient formability during hot pressing, corrosion resistance, and the like, the surface layer containing ZnO particles, an organic resin (binder), and an Al-oxidizer (an oxidizer supplying oxygen to Al) for reducing loss of ZnO.

The inventors have made the invention based on the above findings. The outline of the invention is as follows.

[1] According to an aspect of the invention, an Al-plated steel sheet for hot pressing includes:
   a base;
   an Al-plating layer formed on at least one of opposite surfaces of the base; and
   a surface layer formed on the Al-plating layer, the surface layer containing:
      ZnO particles;
      an organic resin; and
      acetylacetonato in an amount in a range from 10 mass% to 30 mass%, both inclusive, with respect to a total mass of the surface layer, in which
      a mean particle size of the ZnO particles is in a range from 0.10 µm to 5.00 µm, both inclusive, and
      an amount of coating of the ZnO particles is in a range from 0.5 g/m² to 10.0 g/m², both inclusive, in terms of metal Zn.
[2] In the above aspect, the Al-plating layer and the surface layer are formed on each of the opposite surfaces of the base.

The Al-plated steel sheet according to the above aspect is improved in components of the surface layer (outermost layer) and the amount of coating of the ZnO particles (a component of the surface layer). As a result of the improvement, the Al-plated steel sheet according to the aspect achieves sufficient formability (lubricity) during hot pressing, corrosion resistance (corrosion resistance of painted steel), and the like.

### BRIEF DESCRIPTION OF DRAWING(S)

Fig. 1 schematically illustrates a cross section of an Al-plated steel sheet according to an exemplary embodiment with a surface provided with an Al-plating layer and a surface layer.
Fig. 2 schematically illustrates a cross section of the Al-plated steel sheet according to the exemplary embodiment with opposite surfaces each provided with the Al-plating layer and the surface layer.

### DESCRIPTION OF EMBODIMENT(S)

Detailed description will be made below on an Al-plated steel sheet (hereinafter, occasionally simply referred to as "steel sheet") suitable for hot pressing according to an exemplary embodiment of the invention. It should be noted that the invention is by no means limited to the exemplary embodiment. Components according to the exemplary embodiment include components replaceable or easily conceivable for those skilled in the art or components substantially the same as such replaceable or easily conceivable components. Furthermore, a variety of configurations according to the exemplary embodiment may be combined by those skilled in the art as desired within a scope of obviousness.

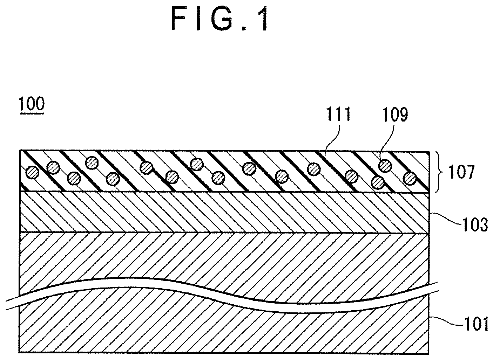

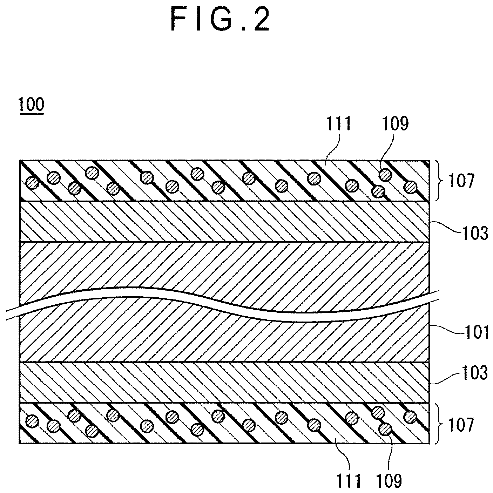

Fig. 1 illustrates an exemplary Al-plated steel sheet according to the exemplary embodiment of the invention. An Al-plated steel sheet 100 according to the exemplary embodiment of the invention includes a base 101, an Al-plating layer 103 formed on a surface of the base 101, and a surface layer 107 formed on a surface of the Al-plating layer 103. The surface layer 107 contains acetylacetonato and ZnO particles 109 united by an organic resin 111. The Al-plating layer 103 and the surface layer 107 may be formed on each of opposite surfaces of the base 101 (see Fig. 2). Each layer will be described below in detail.

### Al-Plated Steel Sheet 100

### Base 101

The base 101 (a member for forming the Al-plating layer 103) for the Al-plated steel sheet 100 according to the exemplary embodiment is a member configured to exhibit an excellent mechanical strength (i.e., a variety of properties against mechanical deformation and destroy such as tensile strength, yield point, extensibility, durability during a drawing process, hardness, impact value, endurance strength, and creep strength) during hot pressing subsequent to formation of the plating layer. For instance, a member added with C (carbon) or alloy element for enhancement of hardenability is used. As a result, an automobile part produced by hot-pressing the Al-plated steel sheet 100, which is produced by forming the Al-plating layer 103 and the surface layer 107 as described later, exhibits an excellent mechanical strength.

In other words, the base 101 for the Al-plated steel sheet 100 according to the exemplary embodiment may be any typical member with an excellent mechanical strength. For instance, the base 101 may be a member containing, but not limited to, the following components.

For instance, the base 101 according to the exemplary embodiment contains, in mass%, C: not less than 0.01% nor more than 0.5%, Si: 2.0% or less, Mn: not less than 0.01% nor more than 3.5%, P: 0.1% or less, S: 0.05% or less, Al: not less than 0.001% nor more than 0.1%, and N: 0.01% or less. The base 101 may selectively further contain, in mass%, one of or two or more of Ti: not less than 0.005% nor more than 0.1%, B: not less than 0.0003% nor more than 0.01%, Cr: not less than 0.01% nor more than 1.0%, Ni: not less than 0.01% nor more than 5.0%, Mo: not less than 0.005% nor more than 2.0%, and Cu: not less than 0.005% nor more than 1.0%, in addition to elements such as W, V, Nb, and Sb. Furthermore, the balance of the base 101 consists of Fe and inevitable impurities. Detailed description will be made below on components added to the base 101. A unit % of each component means mass% throughout the description below.

### C: not less than 0.01% nor more than 0.5%

Carbon (C), which is inevitably present in steel, is contained to ensure a desired mechanical strength of the base 101. Since an excessive reduction in the content of C increases costs for smelting, the content of C is preferably 0.01% or more. Furthermore, C contained in an amount of 0.1% or more eliminates the necessity of addition of a large amount of other alloy elements for improvement in the mechanical strength, since addition of C has a large effect in improvement in the strength. Meanwhile, C contained in an amount exceeding 0.5% would cause frequent melt fracture, although the base 101 can be further hardened. Accordingly, the content of C is preferably in a range from 0.01% to 0.5%, both inclusive, more preferably from 0.1% to 0.4%, both inclusive, in terms of improvement in the strength and prevention of melt fracture. It should be noted that the content of C is further preferably in a range from 0.15% to 0.35%, both inclusive.

### Si: 2.0% or less

Silicon (Si), which is added as a deoxidizer or the like, is an element inevitably contained in a steel-smelting process. However, an excessive addition of Si lowers ductility during hot rolling of a steel manufacturing process and, consequently, degrades the resulting surface texture, so that the content of Si is preferably 2.0% or less.

Furthermore, since Si is a reinforcing element capable of improving the mechanical strength of the base 101, Si may be added for the purpose of ensuring the desired mechanical strength as well as C. Si contained in an amount of less than 0.01% is less effective in improving the strength, so that the mechanical strength is unlikely to be sufficiently improved. Meanwhile, since Si is an oxidizable element, Si contained in an amount exceeding 0.6% lowers wettability during Al-melt plating, possibly causing failure in plating. Accordingly, Si is preferably added in an amount of 0.01% to 0.6%, both inclusive. It should be noted that the content of Si is further preferably in a range from 0.05% to 0.5%, both inclusive.

### Mn: not less than 0.01% nor more than 3.5%

Manganese (Mn), which is added as a deoxidizer or the like, is an element inevitably contained in a steel-smelting process. However, an excessive addition of Mn impairs the uniformity of the quality due to segregation of Mn during casting, excessively hardening the steel sheet and, consequently, lowering the ductility during hot rolling and cold rolling. The content of Mn is thus preferably 3.5% or less. Meanwhile, reducing the content of Mn to less than 0.01% increases processes and costs, so that the content of Mn is preferably 0.01% or more. Accordingly, the content of Mn is preferably in a range from 0.01% to 3.5%, both inclusive.

Furthermore, Mn is an element capable of enhancing the hardenability while being a reinforcing element for the base 101. Mn is also effective in reducing the hot shortness associated with S (sulfur), which is one of the inevitable impurities, to a lower level. Thus, Mn contained in an amount of 0.5% or more can improve the hardenability and reduce the hot shortness. Meanwhile, Mn contained in an amount exceeding 3% would lower the strength due to an excessive increase in residual γ phase. Accordingly, Mn is more preferably added in an amount of 0.5% to 3%, both inclusive. It should be noted that the content of Mn is further preferably in a range from 1% to 2%, both inclusive.

### P: 0.1% or less

Phosphorus (P), which is a solid-solution reinforcing element while being an inevitably contained element, is capable of improving the strength of the base 101 with relatively low costs. However, a lower limit of the content of P is preferably 0.001% in terms of economic smelting limit. Meanwhile, P contained in an amount exceeding 0.1% would lower the toughness of the base 101. Accordingly, the content of P is preferably in a range from 0.001% to 0.1%, both inclusive. It should be noted that the content of P is further preferably in a range from 0.01% to 0.08%, both inclusive.

### S: 0.05% or less

Sulfur (S), which is an inevitably contained element, is present as an inclusion in the form of MnS in the base 101, functioning as the origination of destroy to impair the ductility and toughness and, consequently, deteriorate the formability. Accordingly, a lower content of S is more preferred, so that an upper limit is preferably 0.05%. Meanwhile, a reduction in the content of S possibly increases manufacturing costs, so that a lower limit of the content of S is preferably 0.001%. It should be noted that the content of S is further preferably in a range from 0.01% to 0.02%, both inclusive.

### Al: not less than 0.001% nor more than 0.1%

Aluminum (Al) is an element that impairs a plating performance while being a component contained as a deoxidizer in the base 101. Accordingly, an upper limit of the content of Al is preferably 0.1%. Meanwhile, a lower limit of the content of Al is not limited but is preferably, for instance, 0.001% in terms of economic smelting limit. It should be noted that the content of Al is further preferably in a range from 0.01% to 0.08%, both inclusive.

### N: 0.01% or less

Nitrogen (N), which is an inevitably contained element, is preferably contained in a fixed amount in terms of stabilization of a variety of properties of the base 101. Specifically, the content of N may be fixed with reference to respective contents of Ti, Al, and the like. Meanwhile, an excessive content of N possibly increases manufacturing costs due to an increase in the respective contents of Ti, Al, and the like, so that an upper limit of the content of N is preferably 0.01%.

One of or two or more of Ti: not less than 0.005% nor more than 0.1%, B: not less than 0.0003% nor more than 0.01%, Cr: not less than 0.01% nor more than 1.0%, Ni: not less than 0.01% nor more than 5.0%, Mo: not less than 0.005% nor more than 2.0%, and Cu: not less than 0.005% nor more than 1.0%

### Ti: not less than 0.005% nor more than 0.1%

Titanium (Ti) is not only a reinforcing element for the base 101 but also an element capable of improving the heat resistance of the Al-plating layer 103 formed on the surface of the base 101. Ti contained in an amount of less than 0.005% fails to sufficiently improve the strength and heat resistance. Meanwhile, Ti added in an excessive amount would form, for instance, carbide or nitride, softening the base 101. In particular, Ti contained in an amount exceeding 0.1% is highly unlikely to achieve the desired mechanical strength. Accordingly, Ti is more preferably added in an amount of 0.005% to 0.1%, both inclusive. It should be noted that the content of Ti is further preferably in a range from 0.03% to 0.08%, both inclusive.

### B: not less than 0.0003% nor more than 0.01%

Boron (B) is an element that works during quenching, exhibiting an effect in improving the strength of the base 101.

B contained in an amount of less than 0.0003% fails to exhibit a sufficient effect in improving the strength. Meanwhile, B contained in an amount exceeding 0.01% would form an inclusion (e.g., BN and carbon boride) in the base 101, increasing the shortness and, consequently, lowering fatigue strength. Accordingly, B is more preferably added in an amount of 0.0003% to 0.01%, both inclusive. It should be noted that the content of B is further preferably in a range from 0.001% to 0.008%, both inclusive.

### Cr: not less than 0.01% nor more than 1.0%

Chrome (Cr) has an effect in reducing generation of AIN, which causes separation of the Al-plating layer 103, in an interface between the Al-plating layer 103 and the base 101 when the Al-plating layer 103 is alloyed to form an Al-Fe alloy layer. Additionally, Cr is not only an element capable of improving wear resistance but also an element capable of enhancing hardenability. Cr contained in an amount of less than 0.01% fails to sufficiently exhibit the above effects. Meanwhile, Cr contained in an amount exceeding 1.0% not only saturates the above effects but also increases the manufacturing costs of the steel sheet. Accordingly, Cr is more preferably added in an amount of 0.01% to 1.0%, both inclusive. It should be noted that the content of Cr is further preferably in a range from 0.5% to 1.0%, both inclusive.

### Ni: not less than 0.01% nor more than 5.0%

Nickel (Ni) has an effect in improving hardenability during hot pressing. Ni also has an effect in enhancing the corrosion resistance of the base 101. However, Ni contained in an amount of less than 0.01% fails to sufficiently exhibit the above effects. Meanwhile, Ni contained in an amount exceeding 5.0% not only saturates the above effects but also increases the manufacturing costs of the steel sheet. Accordingly, Ni is more preferably added in an amount of 0.01% to 5.0%, both inclusive.

### Mo: not less than 0.005% nor more than 2.0%

Molybdenum (Mo) has an effect in improving hardenability during hot pressing. Mo also has an effect in enhancing the corrosion resistance of the base 101. However, Mo contained in an amount of less than 0.005% fails to sufficiently exhibit the above effects. Meanwhile, Mo contained in an amount exceeding 2.0% not only saturates the above effects but also increases the manufacturing costs of the steel sheet. Accordingly, Mo is more preferably added in an amount of 0.005% to 2.0%, both inclusive.

### Cu: not less than 0.005% nor more than 1.0%

Copper (Cu) has an effect in improving hardenability during hot pressing. Cu also has an effect in enhancing the corrosion resistance of the base 101. Cu contained in an amount of less than 0.005% fails to sufficiently exhibit the above effects. Meanwhile, Cu contained in an amount exceeding 1.0% not only saturates the above effects but also increases the manufacturing costs of the steel sheet. Accordingly, Cu is more preferably added in an amount of 0.005% to 1.0%, both inclusive.

### W, V, Nb, and Sb

It should be noted that in addition to the above plurality of elements, elements such as tungsten (W), vanadium (V), niobium (Nb), antimony (Sb) may be selectively added to the above base 101 according to the exemplary embodiment. These elements may each be added in any content in a known range.

### Balance

The balance of the base 101 consists of iron (Fe) and inevitable impurities. The inevitable impurities include components inherently present in a material and components naturally mixed during the manufacturing process, which are not deliberately contained in the base 101.

The base 101 containing the above components exhibits a mechanical strength of approximately 1500 MPa or more after quenched by heating for hot pressing or the like. In spite of such an excellent mechanical strength, the steel sheet can be easily press-formed by hot pressing as the steel sheet is thermally softened. Furthermore, when cooled from a high temperature after pressed, the base 101 exhibits a high mechanical strength. The mechanical strength can be maintained or improved even when the thickness is reduced for weight reduction.

### Al-Plating Layer 103

The Al-plating layer 103 is formed on at least one of opposite surfaces of the base 101. For instance, the Al-plating layer 103 is formed by, but not limited to, hot dip coating. The Al-plating layer 103 is not limited as long as it consists mainly of Al. The wording "consisting mainly of Al" herein means that Al is contained in an amount of 50 mass% or more. The content of Al (the main component) is preferably 70 mass% or more, which means that Al-plating layer 103 preferably contains Al in an amount of 70 mass% or more. Components other than Al are not limited but Si may be contained at a predetermined concentration.

The Al-plating layer 103 is configured to prevent corrosion of the base 101. The Al-plating layer 103 is also configured to prevent scale (oxide of iron) from being generated on the steel surface during preheating for hot pressing. Thus, the presence of the Al-plating layer 103 on at least one of opposite surfaces of the base 101 can eliminate the necessity of processes such as descaling, surface cleaning, and surface treatment and, consequently, improves the productivity of automobile parts and the like. Furthermore, since a melting point of the Al-plating layer 103 is higher than that of the metallic coating of an organic material or any other metallic material (e.g., Zn material), the Al-plating layer 103 can be processed at a high temperature during hot pressing.

It should be noted that Al contained in the Al-plating layer 103 is sometimes partly or fully alloyed with Fe in the base 101 during hot dip coating or hot pressing. Thus, the Al-plating layer 103 is not always in the form of a single layer with fixed components. For instance, the Al-plating layer 103 sometimes includes a partially alloyed layer (alloy layer) or a steel-aluminum gradient alloy layer with variation in concentration gradient from the surface thereof.

### Surface layer 107

The surface layer 107 is formed on the Al-plating layer 103. The surface layer 107 contains the ZnO particles 109 with a mean particle size in a range from 0.10 µm to 5.00 µm, both inclusive, and the organic resin 111. An amount of coating of the ZnO particles 109 needs to be in a range from 0.5 g/m² to 10.0 g/m², both inclusive, in terms of metal Zn. It should be noted that for the configuration where the Al-plating layer 103 is formed on each of the opposite surfaces of the base 101, the surface layer 107 may be formed on the Al-plating layer 103 on at least one of the opposite surfaces.

The surface layer 107 may be formed using, for instance, a solution prepared by blending the above components in a variety of solvents such as water and organic solvent.

### ZnO Particles 109

To achieve good formability and corrosion resistance during hot pressing, the ZnO particles 109 with a mean particle size of 0.10 µm to 5.00 µm, both inclusive, need to be formed on the Al-plating layer 103 in an amount of coating of 0.5 g/m² to 10.0 g/m², both inclusive, in terms of metal Zn. The ZnO particles 109 come into point-contact with the mold with a lowered kinematic friction coefficient, thus improving formability. However, the ZnO particles 109 with a mean particle size of less than 0.10 µm fail to sufficiently improve formability due to an excessive number of contact points between the ZnO particles 109 and the mold.

Meanwhile, the ZnO particles 109 with a mean particle size exceeding 5.00 µm lowers weldability. In spite of the insulating properties of ZnO, the ZnO particles 109 with a small particle size are crushed upon application of a welding pressure, ensuring sufficient power distribution points. However, when the ZnO particles 109 have a large mean particle size of more than 5 µm, the ZnO particles 109 are unlikely to be crushed upon application of a welding pressure. As a result, sufficient power distribution points cannot be ensured, so that dust is easily caused to lower weldability.

It should be noted that a method of determining the mean particle size of the ZnO particles 109 is not limited. For instance, the mean particle size may be determined by: observing any selected ten or more of the ZnO particles 109 at 2000-fold magnification with a SEM (Scanning Electron Microscope) or the like; and measuring and averaging maximum particle sizes of these particles. Alternatively, the mean particle size of the ZnO particles 109 may be determined using a particle size distribution measuring device.

When the amount of coating of all the ZnO particles 109 in the surface layer 107 is less than 0.5 g/m² in terms of metal Zn, sufficient formability cannot be exhibited during hot pressing. Meanwhile, with an increase in the amount of coating of the ZnO particles 109, a film electrical resistance of the surface layer 107 increases to lower resistance weldability (e.g., spot weldability) of the steel sheet, although formability and corrosion resistance increase. In other words, when the amount of coating of all the ZnO particles 109 in the surface layer 107 exceeds 10.0 g/m² in terms of metal Zn, a sufficient resistance weldability of the steel sheet is difficult to achieve.

It should be noted that the amount of coating of the ZnO particles 109 on the Al-plating layer 103 may be measured by a calibration curve method using XRF (X-ray Fluorescence).

It should be noted that the term "amount of coating" herein means an amount of coating measured before the steel sheet is set and heated on the conveyor for hot pressing.

### Organic Resin 111

For the steel sheet according to the exemplary embodiment, the organic resin 111, which is a component of the surface layer 107, is not limited as long as the organic resin 111 functions as a binder capable of keeping the ZnO particles 109 within the metallic coating. The organic resin 111 is configured be combusted to disappear during preheating for hot pressing, so that the subsequent processes, such as pressing and welding, are performed without any influence thereof. The organic resin 111 may be an aqueous chemical agent. In this case, for instance, a cation resin, which is mildly alkaline and stable as well as ZnO, is preferably usable and examples of the cation resin include cationic urethane resin and cationic acrylic resin. It should be noted that a ratio of the concentration (g/kg) of the organic resin in the chemical agent is not limited according to the exemplary embodiment. Exemplary resins usable as the organic resin 111 according to the exemplary embodiment of the invention include a cationic urethane resin (manufactured by DKS Co. Ltd., trade name: SUPERFLEX 650).

To allow the organic resin 111 to sufficiently function as a binder, the content of the organic resin 111 with respect to the surface layer 107 as a whole is preferably in a range from, in mass%, 10% to 60%, both inclusive. At a content of less than 10%, the organic resin 111 fails to sufficiently function as a binder, making the metallic coating easy to separate before preheating. It should be noted that the content of the organic resin 111 is preferably 15% or more so that the organic resin 111 stably functions as a binder. Meanwhile, a content of the organic resin 111 exceeding 60% results in unignorable emission of unpleasant odor.

### Acetylacetonato

For the steel sheet according to the exemplary embodiment, the surface layer 107, especially, acetylacetonato contained as an oxidizer for oxidizing Al in the surface layer 107 is considerably important. During continuous heating, the contact area of the Al-plated steel sheet 100 with the conveyor suffers from oxidation of the organic resin 111 and Al in the plating surface, which is accompanied by reduction of ZnO to metal Zn and, consequently, vaporization of the metal Zn. However, addition of acetylacetonato, which is more reducible (i.e., more unlikely to be oxidized) than ZnO, to the surface layer 107 reduces the above behavior of ZnO and, consequently, reduces the loss of ZnO. In other words, addition of acetylacetonato to the surface layer 107 reduces the loss of ZnO contributable to lubricity, allowing for stable formability during hot pressing and corrosion resistance.

Acetylacetonato may be added by itself or added in the form of an acetylacetonato complex (acetylacetonato metal salt). Examples of the acetylacetonato complex include copper complex, manganese complex, nickel complex, zinc complex, titanium complex, and vanadyl complex. Among the above, zinc acetylacetonato (zinc complex) is preferable, since it functions by itself as a ZnO source that generates ZnO.

When the content of acetylacetonato accounts for less than 10 mass% of the entire surface layer 107, which contains ZnO and acetylacetonato, in terms of acetylacetonato, the reduction and loss of ZnO cannot be sufficiently reduced. As a result, lubricity for hot working is lowered. Furthermore, when acetylacetonato is contained in a small amount, the amount of zinc oxide is reduced, thus lowering corrosion resistance of painted steel. Meanwhile, in an amount exceeding 30 mass%, acetylacetonato, which is soluble, makes film adhesion worse, lowering corrosion resistance of painted steel.

It should be noted that the amount in terms of acetylacetonato is determined as follows. First, a predetermined area of the surface layer 107 is removed using fuming nitric acid, and a weight of the surface layer 107 is measured before and after the removal to calculate a metallic coating amount of coating. Subsequently, the removed metallic coating is well stirred in a known amount of a 30-degrees-C solution to elute acetylacetonato contained in the metallic coating, a concentration of the acetylacetonato in the solution is measured by a calibration curve method based on liquid chromatography, and an amount of the acetylacetonato contained in the metallic coating is calculated from the amount of the solution, while a ratio of the acetylacetonato is calculated from the metallic coating amount of coating.

The surface layer 107 may be formed on the Al-plating layer 103 by, but not limited to, a method including: preparing a solution or solvent where the above main components (i.e., ZnO particles 109, organic resin 111, and acetylacetonato) are dissolved; applying this solution or solvent on the Al-plating layer 103 using a known device such as roll coater and spray; and drying the applied solution or solvent. The applied solution or solvent may be dried by, but not limited to, a variety of techniques such as hot-air heating, IH (Induction Heating), NIR (Near InfraRed) heating, and resistance heating. Moreover, a heating temperature for drying is preferably determined as desired, considering a glass transition temperature (Tg) of the organic resin 111 (binder).

As described above, the Al-plated steel sheet 100 according to the exemplary embodiment exhibits an excellent lubricity during hot pressing without loss of ZnO metallic coating at the contact area of the surface layer 107 (outermost layer) with the conveyor, achieving, for instance, excellent formability during hot pressing and excellent corrosion resistance after hot pressing. Furthermore, the Al-plated steel sheet 100 according to the exemplary embodiment is less adhesive to a mold due to the presence of the highly lubricative surface layer 107. If the Al-plating layer 103 is accidentally powdered by heating, adhesion of the powder (e.g., Al-Fe powder) to a mold used for subsequent pressing would be reduced by the presence of the highly lubricative surface layer 107. Thus, the Al-plated steel sheet 100 according to the exemplary embodiment can be hot-pressed without the necessity of removal of Al-Fe powder adhering to the mold, achieving excellent productivity.

### Example(s)

Effects of the exemplary embodiment of the invention will be specifically described below with reference to Examples. It should be noted that the conditions for Examples of the invention below are not exhaustive.

A cold-rolled steel sheet (balance: Fe and inevitable impurities, thickness: 1.4 mm) with chemical components shown in Table 1 was used. The Al-plating layer 103 was formed on each of opposite surfaces of the cold-rolled steel sheet by Sendzimir process. An annealing temperature for forming the Al-plating layer 103 was approximately 800 degrees C. A typical Al-plating bath was used.

It should be noted that an amount of the Al-plating layer 103 adhering to the base 101 was adjusted to 160 g/m² per each surface by gas wiping.

**Table 1**

| C | Si | Mn | P | S | Ti | B | Al | N |
|---|---|---|---|---|---|---|---|---|
| 0.22 | 0.12 | 1.25 | 0.01 | 0.005 | 0.02 | 0.003 | 0.04 | 0.0005 |

Subsequently, the surface layer 107 was formed by applying on the Al-plating layer 103 a solution prepared by blending a dispersant of the ZnO particles 109 (manufactured by SAKAI CHEMICAL INDUSTRY CO., LTD., trade name: DIF-3ST4S), a cationic urethane resin (manufactured by DKS Co. Ltd., trade name: SUPERFLEX 650) as the organic resin 111, and acetylacetonato using a roll coater, and drying the solution such that a sheet temperature reached 80 degrees C. For Sample No. 17, the organic resin 111 was not used and cyclopentasiloxane with ZnO particles 109 being dispersed was applied and then dried at 80 degrees C.

Sample Al-plated steel sheets were thus produced. It should be noted that the solution for forming the surface layer 107 shown in Table 2 was prepared by blending a commercially available reagent with distilled water. It should also be noted that the term "Zn Amount of Coating" in Table 2 means a value (unit: g/m²) of a total amount of coating of the ZnO particles 109 per square meter in terms of the mass of metal Zn, the value being measured by a calibration curve method using XRF.

### Measurement Conditions

The content of acetylacetonato, the particle size of the ZnO particles 109, and the ZnO amount of coating were identified as follows.

### 1. Content of Acetylacetonato

The surface layer 107 was partly removed using fuming nitric acid as described above and a concentration of the removed acetylacetonato was measured by a calibration curve method based on liquid chromatography.

### 2. Particle Size of ZnO Particles 109

The ZnO particles 109 were observed at 2000-fold magnification with a scanning electron microscope manufactured by JEOL Ltd. (trade name: JSM-7800F) and respective maximum particle sizes of 20 of the ZnO particles 109 were measured and averaged. The average value was defined as the particle size of the ZnO particles 109.

### 3. ZnO Amount of Coating

The ZnO amount of coating was measured with an X-ray fluorescence analyzer manufactured by Rigaku Corporation (trade name: ZSX Primus) under the following conditions. For the measurement, an analytical curve was created in advance that represented a relationship between ZnO amount of coating and intensity of X-ray fluorescence in terms of metal Zn content and the amount of coating was determined with reference to the analytical curve.
measurement diameter: 30 mm
measurement atmosphere: vacuum
spectrum: Zn-Kα
The number of counted peaks of Zn-Kα of X-ray fluorescence analysis measured under the above conditions was referred to.

**Table 2**

| | Outer Cladding Layer 107 | | | | | |
|---|---|---|---|---|---|---|
| | ZnO Particles 109 | | Organic Resin 111 | | Oxidizer | |
| | Particle Size (*µ*m) | Zn Amount of Coating (g/m²) | Resin Species | Ratio of Organic Resin in Chemical Agent(mass%) | Type | Content in Terms of Acetylacetonato (mass%) |
| Sample No. 1 | 0.1 | 1.5 | cationic urethane resin | 30 | acetylacetonato | 20 |
| Sample No. 2 | 1 | 1.5 | cationic urethane resin | 30 | acetylacetonato | 20 |
| Sample No. 3 | 5 | 1.5 | cationic urethane resin | 30 | acetylacetonato | 20 |
| Sample No. 4 | 1 | 0.5 | cationic urethane resin | 30 | acetylacetonato | 20 |
| Sample No. 5 | 1 | 10 | cationic urethane resin | 30 | acetylacetonato | 20 |
| Sample No. 6 | 1 | 1.5 | cationic urethane resin | 30 | acetylacetonato | 30 |
| Sample No. 7 | 1 | 1.5 | cationic urethane resin | 30 | acetylacetonato | 10 |
| Sample No. 8 | 1 | 1.5 | cationic urethane resin | 60 | acetylacetonato | 20 |
| Sample No. 9 | 1 | 1.5 | cationic urethane resin | 10 | acetylacetonato | 20 |
| Sample No. 10 | 1 | 1.5 | cationic acrylic resin | 30 | acetylacetonato | 20 |
| Sample No. 11 | 0.08 | 1.5 | cationic urethane resin | 30 | acetylacetonato | 20 |
| Sample No. 12 | 7 | 1.5 | cationic urethane resin | 30 | acetylacetonato | 20 |
| Sample No. 13 | 1 | 0.3 | cationic urethane resin | 30 | acetylacetonato | 20 |
| Sample No. 14 | 1 | 12 | cationic urethane resin | 30 | acetylacetonato | 20 |
| Sample No. 15 | 1 | 1.5 | cationic urethane resin | 30 | acetylacetonato | 5 |
| Sample No. 16 | 1 | 1.5 | cationic urethane resin | 30 | acetylacetonato | 35 |
| Sample No. 17 | 1 | 1.5 | None | 0 | acetylacetonato | 20 |
| Sample No. 18 | 1 | 1.5 | cationic urethane resin | 30 | None | 0 |

Next, the sample steel sheets produced as described above were evaluated by the following methods in terms of a variety of properties. Table 3 shows the results.

### (1) Lubricity for Hot Working (Lubricity)

For evaluation of lubricity for hot working, each sample steel sheet was subjected to a hot mold-pulling test. More specifically, each 30 mm × 350 mm sample steel sheet was put in a furnace and heated at 900 degrees C for 6 minutes while sandwiched between two SiC plates (60 mm width × 200 mm length × 30 mm thickness) and taken out of the furnace. A flat mold (50 mm width × 40 mm length) of SKD11 was then pressed against opposite surfaces of the steel sheet at approximately 700 degrees C for a pulling process. The steel sheet was sandwiched between by the SiC plates at both sides thereof with supply of oxygen through the surfaces being sufficiently cut in order to simulate the situation where the ZnO metallic coating disappeared at the stacked portion in contact with the conveyor under more severer conditions. A pressing load and a pulling load were measured and a value calculated by pulling load / (2 × pressing load) was defined as a hot friction coefficient. It should be noted that a smaller kinematic friction coefficient means a higher lubricity for hot working, and a kinematic friction coefficient of less than 0.52 is evaluated to pass in Table 3.

### (2) Corrosion Resistance of Painted Steel

Each 120 mm × 200 mm sample steel sheet was put in a furnace and placed on an in-furnace SiC mount with an evaluation surface of the steel sheet in contact with the mount. The steel sheet was then heated in the furnace at 900 degrees C for 6 minutes with a SUS304 block (50 mm × 50 mm × 70 mm) having been heated to 900 degrees C placed thereon. Immediately after taken out of the furnace, the steel sheet was sandwiched between a stainless steel mold for rapid cooling. The cooling rate was approximately 150 degrees C/second. Next, each steel sheet having been cooled was cut from a center thereof into a 70 mm × 150 mm piece. After subjected to a chemical conversion treatment with a chemical conversion solution (PB-SX35) manufactured by Nihon Parkerizing Co., Ltd., the piece was coated with a electrodeposition paint (POWERNICS 110) manufactured by Nippon Paint Co., Ltd. such that a thickness of the piece reached 20 µm, and burnt at 170 degrees C. It should be noted that each 70 mm × 150 mm steel sheet with a thermocouple welded thereto was put in an air atmosphere furnace whose temperature was set to 900 degrees C, and a temperature of the steel sheet was measured until it reached 900 degrees C to calculate an average temperature-rise rate. The average temperature-rise rate was 5 degrees C/second.

Evaluation of corrosion resistance of painted steel was performed by a method in accordance with JASO M609 instituted by Society of Automotive Engineers of Japan, Inc. Specifically, a film was cross-cut in advance with a cutter, and a width (maximum value on one side) of swelling of the film from the cross cut was measured after the elapse of 180 cycles of a corrosion test (60 days). A smaller width of swelling of the film means a higher corrosion resistance and a width equal to or less than 5 mm is evaluated to pass in Table 3.

### (3) Spot Weldability

### Spot weldability was evaluated as follows.

The prepared sample steel sheets were each put in a furnace and heated therein at 900 degrees for 6 minutes. The sample steel sheets were then each sandwiched by a stainless steel mold for rapid cooling immediately after taken out of the furnace. The cooling rate was approximately 150 degrees C/second. Each cooled steel sheet was cut into a 30 × 50 mm piece for measurement of a suitable current range for spot welding (maximum current to minimum current). The measurement conditions are as follows. A current value achieving a nugget diameter of 3 × (t)0.5 was defined as the minimum current, whereas a current causing expulsion was defined as the maximum current.
current: DC
electrode: made of chrome copper, DR (40R / 6-mm-diameter tip end)
compression: 400 kgf (1 kgf = 9.8N)
power supply time: 240 microseconds
A larger value means a higher spot weldability and a spot weldability of 1.0 kA or more is evaluated to pass in Table 3.

### (4) ZnO Disappearance Test

Each sample steel sheet was punched into a diameter of 30 mm, and stacked on a 70 mm × 70 mm in-furnace SiC mount while a 50 mm × 50 mm × 70 mm SUS304 block having been heated to 900 degrees C was placed thereon. The steel sheet in this state was then heated in a furnace at 900 degrees C for 6 minutes, and sandwiched by a stainless steel mold for rapid cooling immediately after taken out of the furnace. Values of Zn amount of coating before and after the heating were measured with XRF. The Zn amount of coating was measured in terms of Zn and a ZnO residual ratio was calculated in terms of Zn.

A sample with a Zn residual ratio of 75% or more and a Zn residual amount of 0.40 g/m² or more is evaluated to pass in Table 3.

**Table 3**

| | ZnO Disappearance Test | | Lubricity for Hot Working | Corrosion Resistance of Painted Steel | Weldability |
|---|---|---|---|---|---|
| | Zn Residual Ratio (%) | Zn Residual Amount (g/m²) | | | |
| Sample No. 1 | 78 | 1.17 | 0.46 | 2.7 | 2.8 |
| Sample No. 2 | 77 | 1.15 | 0.46 | 2.8 | 2.8 |
| Sample No. 3 | 78 | 1.17 | 0.46 | 2.7 | 2.8 |
| Sample No. 4 | 80 | 0.4 | 0.51 | 4.9 | 3.0 |
| Sample No. 5 | 80 | 8 | 0.43 | 2.1 | 1.1 |
| Sample No. 6 | 79 | 1.18 | 0.46 | 2.6 | 2.8 |
| Sample No. 7 | 75 | 1.13 | 0.46 | 2.9 | 2.8 |
| Sample No. 8 | 77 | 1.16 | 0.46 | 2.8 | 2.8 |
| Sample No. 9 | 77 | 1.15 | 0.46 | 2.7 | 2.8 |
| Sample No. 10 | 78 | 1.17 | 0.46 | 2.7 | 2.8 |
| Sample No. 11 | 78 | 1.17 | 0.52 | 2.7 | 2.8 |
| Sample No. 12 | 79 | 1.19 | 0.50 | 2.7 | 0.7 |
| Sample No. 13 | 77 | 0.23 | 0.63 | 7.8 | 3.0 |
| Sample No. 14 | 88 | 10.5 | 0.43 | 2 | 0.7 |
| Sample No. 15 | 23 | 0.34 | 0.55 | 7.1 | 2.8 |
| Sample No. 16 | 84 | 1.26 | 0.46 | 5.6 | 2.8 |
| Sample No. 17 | 77 | 1.16 | 0.55 | 5.3 | 2.8 |
| Sample No. 18 | 3 | 0.05 | 0.68 | 8 | 2.8 |

As is understood from Tables 2 and 3, it has been found that all of the Al-plated steel sheets for hot pressing within the scope of the invention (sample Nos. 1 to 10) achieved excellent results of all the four evaluations (the variety of properties and ZnO disappearance test), where: the surface layer 107 contained the organic resin 111; the mean particle size of the ZnO particles 109 was in a range from 0.10 µm to 5.00µm (both inclusive); the amount of coating of the ZnO particles 109 was in a range from 0.5 g/m² to 10.0 g/m² (both inclusive) in terms of metal Zn; and acetylacetonato was added to the surface layer 107 in an amount of 10% to 30% (both inclusive) in terms of acetylacetonato.

In contrast, it has been found that none of the Al-plated steel sheets for hot pressing out of the scope of the invention (sample Nos. 11 to 18) achieved an excellent result of at least one of the above four evaluations (the variety of properties and ZnO disappearance test), where the organic resin 111 was not contained, or one of the content of acetylacetonato, the mean particle size of the ZnO particles 109, the amount of coating of the ZnO particles 109, and the like was out of the predetermined range according to the invention.

### EXPLANATION OF CODE(S)

- 100: Al-plated steel sheet
- 101: base
- 103: Al-plating layer
- 107: surface layer
- 109: ZnO particles
- 111: organic resin

## Claims

1. An Al-plated steel sheet for hot pressing, comprising:
a base;
an Al-plating layer formed on at least one of opposite surfaces of the base; and
a surface layer formed on the Al-plating layer, the surface layer comprising:
ZnO particles;
an organic resin; and
acetylacetonato in an amount in a range from 10 mass% to 30 mass%, both inclusive, with respect to a total mass of the surface layer, wherein
a mean particle size of the ZnO particles is in a range from 0.10 µm to 5.00 µm, both inclusive, and
an amount of coating of the ZnO particles is in a range from 0.5 g/m² to 10.0 g/m², both inclusive, in terms of metal Zn.

2. The Al-plated steel sheet according to claim 1, wherein the Al-plating layer and the surface layer are formed on each of the opposite surfaces of the base.
